(19) Europäisches Patentamt
European Patent Office
Office européen des brevets

(11) **EP 4 685 025 A1**

(12) **EUROPEAN PATENT APPLICATION**
published in accordance with Art. 153(4) EPC

(43) Date of publication:
**28.01.2026 Bulletin 2026/05**

(21) Application number: **23932504.6**

(22) Date of filing: **14.04.2023**

(51) International Patent Classification (IPC):
**B60W 30/06** (2006.01)   **G06F 3/0488** (2022.01)

(52) Cooperative Patent Classification (CPC):
**B60W 30/06; G06F 3/0488**

(86) International application number:
**PCT/CN2023/088380**

(87) International publication number:
**WO 2024/212217 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Shenzhen Yinwang Intelligent
Technologies Co., Ltd.
Shenzhen, Guangdong 518110 (CN)**

(72) Inventors:
• **SHEN, Yujie**
  **Shenzhen, Guangdong 518129 (CN)**
• **QIN, Cai**
  **Shenzhen, Guangdong 518129 (CN)**
• **ZHANG, Xiaohua**
  **Shenzhen, Guangdong 518129 (CN)**

(74) Representative: **Maiwald GmbH
Elisenhof
Elisenstraße 3
80335 München (DE)**

(54) **CONTROL METHOD AND DEVICE, AND VEHICLE**

(57)     A control method and apparatus, and a vehicle are provided. The method includes: controlling a display apparatus to display a first area, where the first area indicates an area available for parking of the vehicle; controlling, based on a first instruction, the display apparatus to display a first parking area, where the first area includes the first parking area; and controlling, based on a first area boundary of the first area and the first parking area, the display apparatus to display a second parking area, where the first area includes the second parking area. Technical solutions of this application may be applied to an intelligent vehicle or an electric vehicle, so that complexity of a user operation in an automatic parking process can be reduced. This helps improve user experience.

FIG. 5

## Description

### TECHNICAL FIELD

This application relates to the field of intelligent vehicles, and more specifically, to a control method and apparatus, and a vehicle.

### BACKGROUND

Automatic parking (auto parking, AP) means automatic parking of a vehicle, that is, an autonomous driving system may semi-automatically or fully automatically help a user park the vehicle into a parking space. Automatic parking may include automatic parking assist (auto parking assist, APA), remote parking assist (remote parking assist, RPA), automatic valet parking (auto valet parking, AVP), and the like.

A current automatic parking system can determine, based on a location of a virtual icon on a parking interaction interface, a target parking area selected by the user, and further control the vehicle to be parked into the target parking area. Generally, the user may adjust the location of the virtual icon on the parking interaction interface through dragging or the like. However, in a current technical background, when the user drags the virtual icon to a corresponding location on the parking interaction interface, a pose of the virtual icon may be different from a parking pose expected by the user. In this case, the user further needs to manually adjust the location of the virtual icon, resulting in high operation complexity of the user in a parking process.

### SUMMARY

This application provides a control method and apparatus, and a vehicle, to reduce complexity of a user operation in an automatic parking process. This helps improve user experience.

According to a first aspect, a control method is provided. The method may be performed by a vehicle, or may be performed by a computing platform of a vehicle, or may be performed by a chip or a circuit used in a vehicle, or may be performed by a mobile terminal associated with a vehicle. This is not specifically limited in this application.

The vehicle in this application may include a road transportation means, a water transportation means, an air transportation means, an industrial device, an agricultural device, an entertainment device, or the like. For example, the vehicle is a vehicle in a broad sense, and may be a transportation means (like a commercial vehicle, a passenger vehicle, a motorcycle, a flight vehicle, or a train), an industrial vehicle (like a pallet truck, a trailer, or a tractor), an engineering vehicle (like an excavator, a bulldozer, or a crane), an agricultural device (like a lawn mower or a harvester), a recreation device, or a toy vehicle. A type of the vehicle is not specifically limited in embodiments of this application.

The method includes: controlling a display apparatus to display a first area, where the first area indicates an area available for parking of a vehicle; controlling, based on a first instruction, the display apparatus to display a first parking area, where the first area includes the first parking area; and controlling, based on a first area boundary of the first area and the first parking area, the display apparatus to display a second parking area, where the first area includes the second parking area.

In the foregoing technical solution, a pose indicating a target parking area of the vehicle can be automatically adjusted. When it is detected that an icon of the parking area is moved to a location (for example, a first location) in a preset area on a human machine interface, the target parking area is controlled to be displayed in a specific area. This helps reduce complexity of a user operation in a remote parking process, thereby improving user experience.

For example, the second parking area indicates the target parking area of the vehicle and a target pose of the vehicle in the target parking area.

For example, the first parking area is displayed at the first location of the first area. The first instruction may be generated based on a preset operation of a user. The preset operation may include but is not limited to: an operation of touching and holding a first location on a first interface, an operation of touching and holding an icon or an image indicating a vehicle location and dragging the icon or the image to the first location, an operation of tapping the first location after tapping an icon creation button, or an operation of sliding an icon clockwise or counterclockwise to move the icon to the first location.

With reference to the first aspect, the controlling the display apparatus to display a second parking area includes: when a distance between a preset point of the first parking area and the first area boundary is less than or equal to a first distance threshold, controlling the display apparatus to display the second parking area, where a distance between the second parking area and the first area boundary is greater than or equal to a second distance threshold.

In some possible implementations, the distance between the second parking area and the first area boundary includes at least one of the following: a shortest distance between the second parking area and the first area boundary, and a distance between a preset point of the second parking area and the first area boundary.

For example, when a group of boundaries of the second parking area is parallel to the first area boundary, the shortest distance between the second parking area and the first area boundary is a distance between the first area boundary and a boundary that is of the second parking area and that is parallel to and closest to the first area boundary. When any group of boundaries of the second parking area is not parallel to the first area boundary, the shortest distance between the second parking area and the first area boundary is a distance between the first area boundary and a vertex that is of the second parking area and that is closest to the first area boundary.

For example, the preset point of the first parking area may include a center point of the first parking area or another point in the first parking area. The preset point of the second parking area may include a center point of the second parking area or another point in the second parking area.

In the foregoing technical solution, when the distance between the preset point of the first parking area and the area boundary is less than or equal to the preset threshold, the second parking area is controlled to be displayed. This helps improve a degree of coincidence between the target parking area and a parking area envisaged by the user, thereby improving a human-like degree of automatic parking. The distance between the second parking area and the first area boundary is controlled to be greater than or equal to the preset threshold, to help prevent the vehicle from scratching the first area boundary in a parking process, thereby improving traveling safety of the vehicle. In addition, only the shortest distance between the second parking area and the first area boundary is limited to be greater than or equal to the preset threshold, and a posture angle of the second parking area is not limited. This helps reduce complexity in a process of adjusting a pose in the target parking area.

With reference to the first aspect, in some implementations of the first aspect, the controlling the display apparatus to display the second parking area includes: when an included angle between the first area boundary and a first boundary of the first parking area is less than or equal to a first included angle threshold, controlling a second boundary of the second parking area to be parallel to the first area boundary, where the second boundary corresponds to the first boundary.

In the foregoing technical solution, when an included angle between a boundary of a parking area and the first area boundary is less than or equal to a preset threshold, the posture angle of the parking area is automatically adjusted, so that the boundary of the parking area is parallel to the first area boundary. This helps reduce operation difficulty of the user. In addition, in the foregoing technical solution, the shortest distance between the second parking area and the first area boundary is limited to be greater than or equal to the preset threshold, and the second boundary of the second parking area is limited to be parallel to the first area boundary. This helps improve a human-like degree of automatic parking. In addition, after the vehicle is parked into the second parking area, a parking location of the vehicle does not affect passing of another vehicle or another traffic participant.

With reference to the first aspect, in some implementations of the first aspect, the first area further includes a second area boundary, the second area boundary is parallel to the first area boundary, and a distance between the second area boundary and the first area boundary is less than or equal to a third distance threshold; and the controlling the display apparatus to display a second parking area includes: when the preset point of the first parking area is located between the first area boundary and the second area boundary, controlling, based on the first parking area, the first area boundary, and the second area boundary, the display apparatus to display the second parking area.

In the foregoing technical solution, when the preset point of the first parking area is located between the first area boundary and the second area boundary, the second parking area is controlled to be displayed in the first area (that is, between the first area boundary and the second area boundary). In this way, the user does not need to move or dispose the center point of the first parking area in the middle of the two boundaries of the first area. This helps reduce operation difficulty of the user, thereby improving user experience.

With reference to the first aspect, in some implementations of the first aspect, the controlling the display apparatus to display the second parking area includes: when a distance between the preset point of the first parking area and a first reference line is less than or equal to a fourth distance threshold, controlling a shortest distance between the second parking area and the first area boundary to be greater than or equal to a fifth distance threshold, and/or controlling a shortest distance between the second parking area and the second area boundary to be greater than or equal to the fifth distance threshold, where the first reference line is a perpendicular bisector of a connection line between the first area boundary and the second area boundary.

For example, the fourth distance threshold and the first distance threshold may be a same value or different values.

For example, the fifth distance threshold and the second distance threshold may be a same value or different values.

For example, a central axis that is of the second parking area and that is parallel to a long edge of the second parking area is parallel to the first reference line, or may not be parallel to the first reference line.

In some possible implementations, when there are a plurality of first areas on an interface, and the user accidentally releases the first parking area when dragging the first parking area to a location between two boundaries of a first area (which does not indicate an area in which the user wants to park the vehicle), a distance between the preset point of the first parking area and a first reference line of the first area is greater than the preset threshold. In this case, according to the foregoing technical solution, the second parking area is not controlled based on the first parking area, to be displayed in the first area.

In the foregoing technical solution, when the user drags the first parking area to a system preset area, the first parking area is controlled to cover a location (namely, the second parking area) indicating the target parking area. This helps reduce a probability of incorrect matching, thereby improving user experience.

With reference to the first aspect, in some implementations of the first aspect, a first central axis of the second parking area is parallel to the first reference line.

For example, the first central axis indicates a location of a central axis of the vehicle, and the second parking area includes two central axes that are respectively parallel to a long edge and a short edge of the second parking area. The first central axis may be a central axis parallel to the long edge of the second parking area.

In the foregoing technical solution, the first central axis of the second parking area is parallel to the first area boundary, so that after the vehicle is parked into the target parking area indicated by an icon, it is convenient for the vehicle to park out subsequently. In addition, when the first area boundary is another vehicle, impact on a parking process of the another vehicle can be reduced.

With reference to the first aspect, in some implementations of the first aspect, the first central axis coincides with the first reference line.

In the foregoing technical solution, the vehicle can be parked in the middle of the area available for parking of the vehicle, so that the user of the ego vehicle can get on and off the vehicle without being affected. This helps improve driving experience of the user.

With reference to the first aspect, in some implementations of the first aspect, the controlling the display apparatus to display the second parking area includes: controlling, based on the first area boundary and the first parking area, the display apparatus to display a third parking area; and when there is an obstacle on a first planned route, controlling the display apparatus to display the second parking area, where the first planned route is a route for indicating the vehicle to travel from an area in which the vehicle is currently located to the third parking area.

In the foregoing technical solution, the location of the target parking area may be adaptively adjusted based on a location of the obstacle, so that the vehicle can be parked based on the adjusted target parking area. This helps improve intelligence of the vehicle, thereby improving user experience.

With reference to the first aspect, in some implementations of the first aspect, the first area boundary is determined based on at least one of the following: a boundary of an obstacle, a tangent of an outer edge of an obstacle, and a parking space line.

In the foregoing technical solution, a boundary of the area available for parking of the vehicle may be determined based on the parking space line, and the boundary of the area available for parking of the vehicle may be determined based on features such as a location and a shape of the obstacle, so that the vehicle can display, for the user in a plurality of scenarios, an icon or an image of the area available for parking of the vehicle. This helps improve compatibility of this solution in different scenarios, thereby improving user experience.

According to a second aspect, a control apparatus is provided. The apparatus includes: a first processing unit, configured to control a display apparatus to display a first area, where the first area indicates an area available for parking of a vehicle; a second processing unit, configured to control, based on a first instruction, the display apparatus to display a first parking area, where the first area includes the first parking area; and a third processing unit, configured to control, based on a first area boundary of the first area and the first parking area, the display apparatus to display a second parking area, where the first area displays the second parking area.

With reference to the second aspect, in some implementations of the second aspect, the third processing unit is configured to: when a distance between a preset point of the first parking area and the first area boundary is less than or equal to a first distance threshold, control the display apparatus to display the second parking area, where a distance between the second parking area and the first area boundary is greater than or equal to a second distance threshold.

With reference to the second aspect, in some implementations of the second aspect, the third processing unit is configured to: when an included angle between the first area boundary and a first boundary of the first parking area is less than or equal to a first included angle threshold, control a second boundary of the second parking area to be parallel to the first area boundary, where the second boundary corresponds to the first boundary.

With reference to the second aspect, in some implementations of the second aspect, the first area further includes a second area boundary, the second area boundary is parallel to the first area boundary, and a distance between the second area boundary and the first area boundary is less than or equal to a third distance threshold; and the third processing unit is configured to: when the preset point of the first parking area is located between the first area boundary and the second area boundary, control, based on the first parking area, the first area boundary, and the second area boundary, the display apparatus to display the second parking area.

With reference to the second aspect, in some implementations of the second aspect, the third processing unit is configured to: when a distance between the preset point of the first parking area and a first reference line is less than or equal to a fourth distance threshold, control a shortest distance between the second parking area and the first area boundary to be greater than or equal to a fifth distance threshold, and/or control a shortest distance between the second parking area and the second area boundary to be greater than or equal to the fifth distance threshold, where the first reference line is a perpendicular bisector of a connection line between the first area boundary and the second area boundary.

With reference to the second aspect, in some implementations of the second aspect, a first central axis of the second parking area is parallel to the first reference line, or the first central axis coincides with the first reference line.

With reference to the second aspect, in some implementations of the second aspect, the third processing unit is configured to: control, based on the first area boundary and the first parking area, the display apparatus to display a third parking area; and when there is an obstacle on a first planned route, control the display apparatus to display the second parking area, where the first planned route is a route for indicating the vehicle to travel from an area in which the vehicle is currently located to the third parking area.

With reference to the second aspect, in some implementations of the second aspect, the first area boundary is determined based on at least one of the following: a boundary of an obstacle, a tangent of an outer edge of an obstacle, and a parking space line.

According to a third aspect, a control apparatus is provided. The apparatus includes: a memory, configured to store a computer program; and a processor, configured to execute the computer program stored in the memory, to enable the apparatus to perform the method according to any one of the possible implementations of the first aspect.

According to a fourth aspect, a vehicle is provided. The vehicle includes the apparatus according to any one of the possible implementations of the second aspect or the third aspect.

According to a fifth aspect, a computer program product is provided. The computer program product includes computer program code. When the computer program code is run on a computer, the computer is enabled to perform the method according to any one of the possible implementations of the first aspect.

It should be noted that the computer program code may be completely or partially stored in a first storage medium. The first storage medium may be encapsulated with a processor, or encapsulated separately from a processor.

According to a sixth aspect, a computer-readable medium is provided. The computer-readable medium stores instructions. When the instructions are executed by a processor, the processor is enabled to implement the method according to any one of the possible implementations of the first aspect.

According to a seventh aspect, a chip is provided. The chip includes a circuit, and the circuit is configured to perform the method according to any one of the possible implementations of the first aspect.

**BRIEF DESCRIPTION OF DRAWINGS**

FIG. 1 is a functional block diagram of a vehicle according to an embodiment of this application;
FIG. 2 is a diagram of an architecture of a system required for implementing a control method according to an embodiment of this application;
FIG. 3 is a schematic flowchart of a control method according to an embodiment of this application;
FIG. 4 is an HMI according to an embodiment of this application;
FIG. 5 is another HMI according to an embodiment of this application;
FIG. 6 is another HMI according to an embodiment of this application;
FIG. 7 is another HMI according to an embodiment of this application;
FIG. 8 is another HMI according to an embodiment of this application;
FIG. 9 is another HMI according to an embodiment of this application;
FIG. 10 is another HMI according to an embodiment of this application;
FIG. 11 is another HMI according to an embodiment of this application;
FIG. 12 is another HMI according to an embodiment of this application;
FIG. 13 is another schematic flowchart of a control method according to an embodiment of this application;
FIG. 14 is a block diagram of a control apparatus according to an embodiment of this application; and
FIG. 15 is another block diagram of a control apparatus according to an embodiment of this application.

**DESCRIPTION OF EMBODIMENTS**

In descriptions of embodiments of this application, unless otherwise specified, "/" means "or". For example, A/B may indicate A or B. In this specification, "and/or" describes only an association relationship between associated objects and indicates that three relationships may exist. For example, A and/or B may indicate the following three cases: Only A exists, both A and B exist, and only B exists. In this application, "at least one" means one or more, and "a plurality of" means two or more. "At least one of the following items (pieces)" or a similar expression thereof means any combination of these items, including any combination of singular items (pieces) or plural items (pieces). For example, at least one of a, b, or c may indicate: a, b, c, a and b, a and c, b and c, or a, b, and c, where a, b, and c may be singular or plural.

Prefix words "first", "second", and the like in embodiments of this application are merely intended to distinguish between different objects, and impose no limitation on locations, sequences, priorities, quantities, content, or the like of the described objects. In embodiments of this application, use of a prefix word, for example, an ordinal number, used to distinguish between described objects does not constitute a limitation on the described objects. For descriptions of the described objects, refer to the descriptions of the context in the claims or embodiments. The use of such a prefix word should not constitute a redundant limitation.

As described above, in a current technical background, when a user drags a virtual icon to a corresponding location on a parking interaction interface, a pose of the virtual icon may be different from a parking pose expected by the user. In this case, the user further needs to manually adjust the location of the virtual icon, resulting in high operation complexity of the user in a parking process.

In view of this, embodiments of this application provide a control method and apparatus, and a vehicle. When a user sets a virtual icon to a corresponding location on a parking interaction interface, a pose of the virtual icon may be automatically adjusted based on a location relationship between the virtual icon and a parking area boundary. Further, the vehicle is controlled to be parked into an area indicated by the adjusted virtual icon. This helps reduce complexity of a user operation, thereby improving user experience.

The following describes technical solutions of embodiments in this application with reference to accompanying drawings.

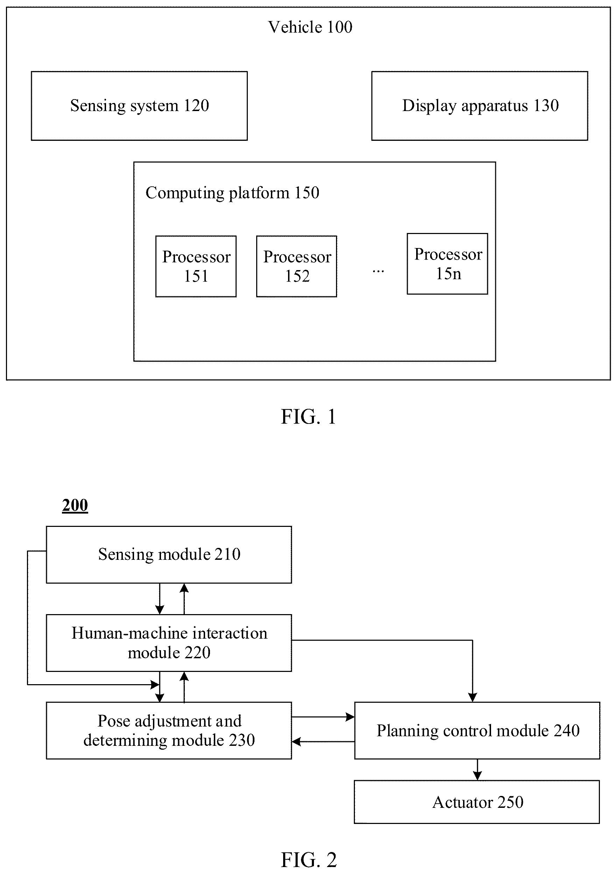

FIG. 1 is a functional block diagram of a vehicle according to an embodiment of this application. As shown in FIG. 1, the vehicle 100 may include a sensing system 120, a display apparatus 130, and a computing platform 150. The sensing system 120 may include several sensors configured to sense information about an environment around the vehicle 100. For example, the sensing system 120 may include a positioning system. The positioning system may be a global positioning system (global positioning system, GPS), a BeiDou system, or another positioning system. For another example, the sensing system 120 may further include one or more of an inertial measurement unit (inertial measurement unit, IMU), a lidar, a millimeter-wave radar, an ultrasonic radar, and a camera apparatus.

Some or all functions of the vehicle 100 may be controlled by the computing platform 150. The computing platform 150 may include processors 151 to 15n. The processor is a circuit with a signal processing capability. In an implementation, the processor may be a circuit with an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field-programmable gate array (field-programmable gate array, FPGA). In the reconfigurable hardware circuit, a process in which the processor loads a configuration document to implement configuration of the hardware circuit may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory, to implement corresponding functions.

The display apparatus 130 in a cockpit is mainly classified into two types. A first type is a vehicle-mounted display, and a second type is a projection display, for example, a head-up display (head-up display, HUD) apparatus. The vehicle-mounted display is a physical display, and is an important part of an in-vehicle infotainment system. A plurality of displays may be disposed in the cockpit, for example, a digital dashboard display and a central display. In some possible implementations, one or more of the vehicle-mounted displays may be a human machine interface (human machine interface, HMI). For example, the central display may be an HMI. The head-up display is also referred to as a head-up display system. The head-up display is mainly configured to display driving information such as a speed and navigation on a display device (for example, a windshield) in front of a driver, to reduce line-of-sight transfer time of the driver, avoid a pupil change caused by a line-of-sight transfer of the driver, and improve traveling safety and comfort. For example, the HUD includes a combiner-HUD (combiner-HUD, C-HUD) system, a windshield-HUD (windshield-HUD, W-HUD) system, and an augmented reality-HUD (augmented reality-HUD, AR-HUD) system.

The vehicle 100 may include an advanced driver assistance system (advanced driver assistance system, ADAS). The ADAS obtains information around the vehicle by using a plurality of types of sensors (including but not limited to: the lidar, the millimeter-wave radar, the camera apparatus, the ultrasonic sensor, the global positioning system, and the inertia measurement unit) in the vehicle, and analyzes and processes the obtained information, to implement functions such as obstacle sensing, target recognition, vehicle positioning, route planning, and driver monitoring/reminder. This improves traveling safety, automation, and comfort of the vehicle.

In terms of logical functions, the ADAS system usually includes three main functional modules: a sensing module, a decision-making module, and an execution module. The sensing module senses an environment around a vehicle body by using a sensor, and inputs corresponding real-time data to a processing center of a decision-making layer. The sensing module mainly includes a vehicle-mounted camera, an ultrasonic radar, a millimeter-wave radar, a lidar, or the like. The decision-making module uses a computing apparatus and an algorithm to make a corresponding decision based on information obtained by the sensing module. After receiving a decision signal from the decision-making module, the execution module takes a corresponding action, for example, driving, a lane change, steering, braking, or warning.

Under different autonomous driving levels (L0 to L5), the ADAS may implement different levels of autonomous driving assistance according to an artificial intelligence algorithm based on information obtained by a plurality of sensors. The foregoing autonomous driving levels (L0 to L5) are based on a grading standard of the society of automotive engineers (society of automotive engineers, SAE). The level L0 indicates no automation, the level L1 indicates driver assistance, the level L2 indicates partial automation, the level L3 indicates conditional automation, the level L4 indicates high automation, and the level L5 indicates full automation. Tasks of monitoring and responding to road conditions at the levels L1 to L3 are jointly completed by a driver and a system, and the driver needs to take over a dynamic driving task. The levels L4 and L5 enable the driver to be completely transformed into a passenger. Currently, functions that can be implemented by the ADAS mainly include but are not limited to: adaptive cruise, automatic emergency braking, automatic parking, blind spot monitoring, traffic warning/braking at front crossroads, traffic warning/braking at rear crossroads, preceding vehicle collision warning, lane departure warning, lane keeping assistance, trailing vehicle anti-collision warning, traffic sign recognition, traffic jam assistance, highway assistance, and the like. It should be understood that the foregoing functions may have specific modes at different autonomous driving levels (L0 to L5). A higher autonomous driving level corresponds to a more intelligent mode. For example, automatic parking may include APA, RPA, and AVP. For APA, the driver does not need to control a steering wheel, but still needs to control a throttle and a brake in the vehicle. For RPA, the driver may remotely park the vehicle outside the vehicle by using a terminal (for example, a mobile phone). For AVP, the vehicle may complete parking without the driver. In terms of the corresponding autonomous driving levels, the APA is approximately at the level L1, the RPA is approximately at the level L2 and L3, and the AVP is approximately at the level L4.

In embodiments of this application, the display apparatus 130 may display a parking area, and preliminarily determine a target area in response to a user operation. The computing platform 150 determines a target pose based on the target area, and control, to be the determined target pose, a pose obtained after the vehicle is parked into the target area.

FIG. 2 is a diagram of an architecture of a system required for implementing a control method according to an embodiment of this application. The system 200 includes a sensing module 210, a human-machine interaction module 220, a pose adjustment and determining module 230, a planning control module 240, and an actuator 250. Details are described below.

The sensing module 210 may include a road side device (road side unit, RSU) in an area in which a vehicle is located, or may include one or more camera apparatuses or one or more radar sensors in the sensing system 120 shown in FIG. 1, and is configured to collect environment information of the area in which the vehicle is located, for example, information about a parking space line and information about an obstacle. The sensing module 210 may further process the collected environment information, to establish a world model including a road, an obstacle, and the like for downstream modules (such as the human-machine interaction module 220, the pose adjustment and determining module 230, and the planning control module 240). For example, the sensing module 210 may determine, based on the obstacle and/or the parking space line, an area available for parking of the vehicle, and send, to the human-machine interaction module 220, information about the area available for parking of the vehicle.

The human-machine interaction module 220 may include one or more displays in the display apparatuses 130 shown in FIG. 1, for example, may include the HMI. Alternatively, the human-machine interaction module 220 may include a mobile terminal. The human-machine interaction module 220 may display an area 1. The area 1 may be an image or a diagram of the area available for parking of the vehicle, or the area 1 may be an icon indicating the area available for parking of the vehicle. The human-machine interaction module 220 may display an icon 1 in the area 1 in response to a preset operation of a user. The icon 1 indicates a target parking area of a vehicle and a target pose of the vehicle in the target parking area. Further, the human-machine interaction module 220 may send pose information (including location and posture information) of the icon 1 to the planning control module 240.

In some possible implementations, the pose information of the icon 1 displayed by the human-machine interaction module 220 may be obtained from the pose adjustment and determining module 230. For example, the human-machine interaction module 220 may display an icon 2 in the area 1 in response to a preset operation of the user, and the human-machine interaction module 220 may send pose information of the icon 2 to the pose adjustment and determining module 230. An area indicated by the icon 2 is not a better parking area, or a posture obtained after the vehicle is parked into the area indicated by the icon 2 is inconsistent with a target pose.

The pose adjustment and determining module 230 may be one or more processors in the computing platform 150 shown in FIG. 1, or may be one or more processors in a cloud server associated with the vehicle 100 shown in FIG. 1. The pose adjustment and determining module 230 may determine the pose information of the icon 1 based on the pose information of the icon 2 and a boundary of the area 1. In some possible implementations, the pose adjustment and determining module 230 may alternatively determine the pose information of the icon 1 based on the obstacle information obtained from the sensing module 210 and a planned route obtained from the planning control module 240. Further, the pose adjustment and determining module 230 sends the pose information of the icon 1 to the human-machine interaction module 220, so that the human-machine interaction module 220 displays the icon 1 based on the pose information of the icon 1. Alternatively, the pose adjustment and determining module 230 may send the pose information of the icon 1 to the planning control module 240, so that the planning control module 240 re-plans a movement route for the vehicle.

The planning control module 240 may be one or more processors in the computing platform 150 shown in FIG. 1, or may be one or more processors in a cloud server associated with the vehicle 100 shown in FIG. 1. The planning control module 240 is configured to plan, based on the pose information of the icon 1 sent by the human-machine interaction module 220 or the pose adjustment and determining module 230, a pose of the vehicle in the target parking area and a movement route along which the vehicle travels from the area in which the vehicle is currently located to the target parking area indicated by the icon 1.

Further, the planning control module 240 calculates a corresponding control value based on the planned movement route, and outputs the control value to the actuator 250.

When the actuator 250 executes the control value, the vehicle is controlled to travel to the target area based on the planned movement route and park into the target area based on the target pose. In some possible implementations, the actuator may include steering and braking control systems in the vehicle 100.

It should be noted that the pose information of the icon 1 may include coordinates of the target parking area and a pose obtained after the vehicle travels into the target parking area. Alternatively, the pose information of the icon 1 may include relative coordinates and a posture of the icon 1 on a parking interaction interface, where the relative coordinates may be coordinates of the icon 1 relative to the area 1.

In some possible implementations, the processor of the system 200 may determine, based on the relative coordinates and the posture of the icon 1 on the parking interaction interface, the coordinates of the target parking area and the pose obtained after the vehicle travels into the target parking area, and vice versa.

For example, the mobile terminal in embodiments of this application may include various handheld devices (for example, mobile phones), wearable devices, computing devices or other processing devices connected to a wireless modem, various forms of terminals, mobile stations, and user equipment, and the like that are associated with the vehicle and that have a wireless communication function and a display function.

It should be understood that the foregoing modules are merely examples. During actual application, the foregoing modules may be added or deleted based on an actual requirement. For example, in the architecture of the system shown in FIG. 2, the planning control module 240 and the actuator 250 may not be included; or in the architecture of the system shown in FIG. 2, the pose adjustment and determining module 230 and the human-machine interaction module 220 may be combined into one module.

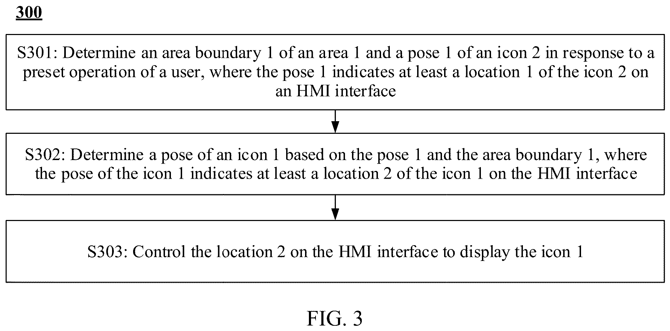

FIG. 3 is a schematic flowchart of a control method according to an embodiment of this application. The method 300 may be performed by the vehicle 100 shown in FIG. 1. More specifically, the method 400 may be performed by the computing platform 150 in the vehicle 100. Alternatively, the method 300 may be performed by the pose adjustment and determining module 230 shown in FIG. 2. For example, the method 300 may include the following steps.

S301: Determine an area boundary 1 of an area 1 and a pose 1 of an icon 2 in response to a preset operation of a user, where the pose 1 indicates at least a location 1 of the icon 2 on an HMI interface.

For example, the area 1 may include the area 1 in the foregoing embodiment, and indicates an actual area available for parking. The area boundary 1 may be a boundary that is in the area 1 and that is close to a target parking area.

For example, before the preset operation of the user is detected, an icon or an image indicating a vehicle location and the area 1 are displayed on the HMI interface. The preset operation may include but is not limited to the following operations:

(1) an operation that the user touches and holds the icon or the image indicating the vehicle location, keeps a finger in contact with a screen, and slides the finger to the location 1 on the HMI interface; where for example, when the user touches and holds the icon or the image indicating the vehicle location, in response to the touch and hold operation of the user, the icon 2 is displayed at the icon or the image indicating the vehicle location; further, in response to the operation that the user keeps the finger in contact with the screen and slides the finger to the location 1, the icon 2 is displayed at the location 1; for example, the "touch and hold" may indicate that duration for tapping the icon or the image exceeds first duration, where the first duration may be 1 second, 2 seconds, or other duration;

(2) an operation that the user touches and holds a blank area in the area 1, where for example, in response to the operation that the user touches and holds the blank area in the area 1, the icon 2 is displayed in the blank area; a center point of the icon 2 may be a location touched and held by the user, and a posture of the icon 2 may be any posture or a system preset posture;

(3) an operation that the user taps a blank area in the area 1 within second duration after tapping an icon creation button, where for example, in response to the foregoing operation of the user, the icon 2 is displayed in the blank area; a center point of the icon 2 may be a location tapped by the user, and a posture of the icon 2 may be any posture or a system preset posture; for example, the first duration may be 3 seconds, 5 seconds, or other duration.

In some possible implementations, a first instruction may be generated based on a vehicle location. For example, the first instruction is generated when a distance between a location to which a vehicle travels and a location indicated by the area boundary 1 is less than or equal to a preset distance threshold. Further, the icon 2 is displayed based on the first instruction, where the icon 2 coincides with the current location of the vehicle.

For example, the location 1 may indicate a location of the center point of the icon 2, or may indicate locations of four vertices of the icon 2.

In some possible implementations, the pose 1 indicates the location of the center point of the icon 2 and a posture angle of the icon 2, where the posture angle may indicate an included angle between a boundary of the icon 2 and the area boundary 1.

In some possible implementations, the area boundary 1 may be determined based on at least one of a boundary of an obstacle, a tangent of an outer edge of an obstacle, and a parking space line. For example, the obstacle may include but is not limited to another traffic participant (for example, a vehicle or a pedestrian), a road or building infrastructure (for example, a street lamp, a guardrail, or a parking lot column), and vegetation (for example, a bush or a tree).

In an example, when the obstacle includes a vehicle, the area boundary 1 may be determined based on an external contour of the vehicle. In another example, when the obstacle includes a regular long-strip-shaped obstacle like a bush, the area boundary 1 may be determined based on a boundary of the long-strip-shaped obstacle. In still another example, when the obstacle includes an arc-shaped obstacle (for example, a circular parterre), the area boundary 1 may be determined based on a tangent of an outer edge of the obstacle. In yet another example, when the obstacle includes a plurality of obstacles scattered at different locations, the area boundary 1 may be determined based on a distance between each of the plurality of obstacles and an icon 1. For example, the area boundary 1 may be a connection line between images or diagrams of two obstacles closest to the icon 1.

In some possible implementations, a distance between the area boundary 1 and a center point of the icon 1 that is indicated by the location 1 is less than or equal to a preset distance 1.

For example, the preset distance 1 may be a value converted based on a distance in the real world, and the preset distance 1 may be determined according to the following formula:

$$T1 = \frac{1}{2} \times l_1 \times \sin\alpha + L.$$

Herein, T1 is the preset distance 1, $l_1$ is a length of a long edge of the icon 1, $\alpha$ is a preset angle, and L is a calibration threshold. For example, $\alpha$ may be 30° or another value. L may be determined based on a calibration distance in the real world. For example, the calibration distance is 0.5 meter, and L may be 1 centimeter when the calibration distance is converted to a scale displayed on the HMI interface.

It should be noted that the calibration distance may alternatively be 0.3 meter or another value.

In some possible implementations, a distance between the area boundary 1 and a center point of the icon 1 that is indicated by the location 1 is less than or equal to a preset distance 1, and an included angle between the area boundary 1 and a boundary 1 of the icon 1 that is indicated by the location 1 is less than or equal to a preset included angle 1. The boundary 1 may be a boundary with a small included angle with the area boundary 1.

For example, the preset included angle 1 may be 30°, 40°, or another value.

S302: Determine a pose of the icon 1 based on the pose 1 and the area boundary 1, where the pose of the icon 1 indicates at least a location 2 of the icon 1 on the HMI interface.

The icon 1 includes the icon 1 in the foregoing embodiment. The icon 1 indicates a target parking location of the vehicle and a target pose of the vehicle. For example, the center point of the icon 1 indicates a location of a center point of the vehicle in the target parking area, and a central axis of the icon 1 that is parallel to the long edge of the icon 1 indicates a location of a central axis of the vehicle in the target parking area.

For example, the pose of the icon 1 may be determined based on the location of the center point of the icon 2, or the pose of the icon 1 may be determined based on the location of the center point of the icon 2 and an included angle between the area boundary 1 and a boundary of the icon 2.

In some possible implementations, the pose of the icon 1 may meet the following: A shortest distance between the icon 1 and the area boundary 1 is greater than or equal to a preset distance 2 when the icon 1 is at the location 2. Alternatively, the pose of the icon 1 may meet the following: The central axis of the icon 1 is parallel to or perpendicular to the area boundary 1 when the icon 1 is at the location 2.

For example, the preset distance 2 may be a value converted based on a distance in the real world. For example, the preset distance 2 may be determined based on the foregoing calibration distance. The calibration distance may be understood as a safe distance for preventing the vehicle from scratching an obstacle in a parking process.

It should be noted that, when the central axis of the icon 1 is parallel to or perpendicular to the area boundary 1, the shortest distance between the icon 1 and the area boundary 1 is a distance between the area boundary 1 and a boundary that is of the area boundary 1 and that is closest to the icon 1. When the central axis of the icon 1 is not parallel to or perpendicular to the area boundary 1, the shortest distance between the icon 1 and the area boundary 1 is a distance between the area boundary 1 and a vertex that is of the area boundary 1 and that is closest to the icon 1.

For example, the location 2 may indicate the location of the center point of the icon 1 and locations of four vertices of the icon 1, or the location 2 may indicate the location of the center point of the icon 1 and a posture angle of the icon 1.

S303: Control the location 2 on the HMI interface to display the icon 1.

In some possible implementations, the location 2 and the location 1 may be a same location.

For example, when the user drags the icon 2 to the location 1 and maintains the icon 2 for preset duration, the HMI interface is controlled to display the icon 1 at the location 1. For example, the preset duration may be 3 seconds, 5 seconds, or other duration.

According to the control method provided in this embodiment of this application, the pose of the icon indicating the target parking area of the vehicle can be automatically adjusted. This helps reduce complexity of a user operation in a remote parking process, thereby improving user experience.

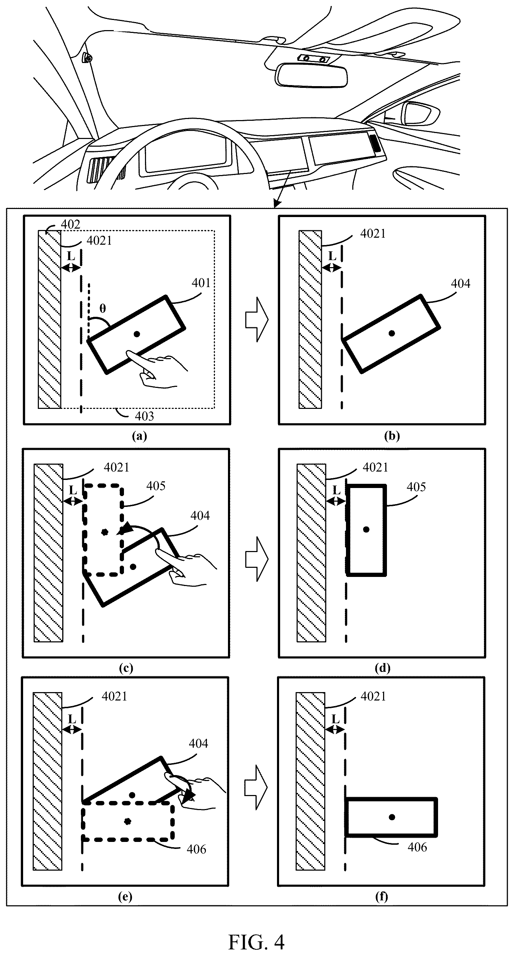

To make a reader better understand the solutions of this application, the following describes the method 300 in detail with reference to FIG. 4 to FIG. 12.

In some implementations, in response to an operation that the user drags the icon 2 to the location 1 and releases the icon 2 (in other words, releases a finger), when a distance between the center point of the icon 2 and the area boundary 1 is less than or equal to the preset distance 1, the vehicle determines the location 2 of the icon 1 based on the pose of the icon 2 and the area boundary 1, and controls the HMI to display the icon 2 at the location 2. For example, refer to FIG. 4.

As shown in (a) in FIG. 4, an icon 401, an obstacle 402, and an area 403 are displayed on an HMI interface of a vehicle-mounted central display. The obstacle 402 is located on a side of the area 403, and a boundary 4021 of the obstacle 402 may be considered as a boundary of the area 403. For example, the icon 401 may be displayed in response to an operation that the user drags the icon 401 to a location shown in the figure. When the user releases the icon 401, if a distance between a center point of the icon 401 and the boundary 4021 is less than or equal to the preset distance 1, the HMI interface is controlled to display an icon 404. As shown in (b) in FIG. 4, a shortest distance L between the icon 404 and the boundary 4021 is equal to (or greater than) a preset distance 2.

A pose of the icon 404 may be considered as being determined by translating the icon 401 in a direction close to the boundary 4021.

In an example, as shown in (c) in FIG. 4, when an operation that the user taps and slides the icon 404 counterclockwise is detected, in response to the operation, the HMI interface is controlled to display an icon 405. As shown in (d) in FIG. 4, in this case, a distance L between the icon 405 and the boundary 4021 is equal to (or greater than) the preset distance 2.

The pose of the icon 405 may be considered as being determined by rotating the icon 404 counterclockwise by an angle θ by using, as a rotation center, a point that is of the icon 404 and that is closest to the boundary 4021.

Optionally, the pose of the icon 405 may alternatively be determined by translating the icon 404 in a direction close to the boundary 4021 after the icon 404 is rotated counterclockwise by the angle θ by using a center point O of the icon 404 as a rotation center.

In another example, as shown in (e) in FIG. 4, when an operation that the user taps and slides the icon 404 clockwise is detected, in response to the operation, the central display is controlled to display an icon 406. As shown in (f) in FIG. 4, in this case, a distance L between the icon 406 and the boundary 4021 is equal to (or greater than) the preset distance 2.

The pose of the icon 406 may be considered as being determined by rotating the icon 404 clockwise by an angle (90°-θ) by using, as a rotation center, a point that is of the icon 404 and that is closest to the boundary 4021.

Optionally, the pose of the icon 406 may alternatively be determined by translating the icon 404 in a direction close to the boundary 4021 after the icon 404 is rotated clockwise by the angle (90°-θ) by using a center point O of the icon 404 as a rotation center.

It should be noted that the icon 401 may be understood as an example of the icon 2 in the method 300, and the location of the icon 2 on the HMI interface may be understood as an example of the location 1. The icon 404 may be understood as an example of the icon 1 in the method 300, the area 403 may be understood as an example of the area 1 in the method 300, and the location of the icon 1 on the HMI interface may be understood as some examples of the location 2. The boundary 4021 may be understood as an example of the area boundary 1 in the method 300. In some scenarios, the icon 404 may alternatively be understood as an example of the icon 2, and the icon 405 may alternatively be understood as an example of the icon 1.

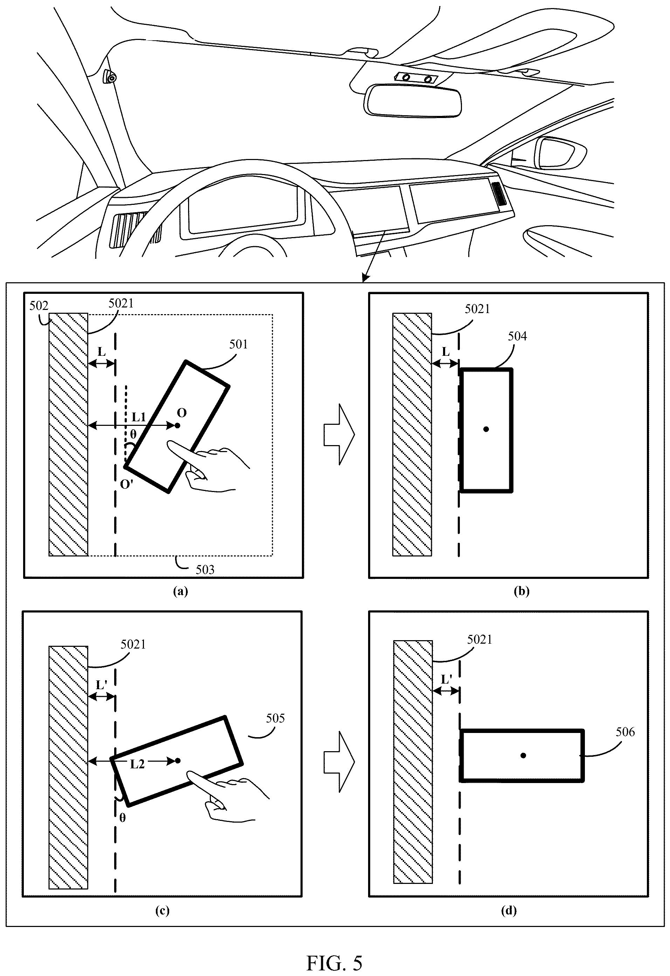

In some implementations, in response to an operation that the user drags the icon 2 to the location 1 and releases the icon 2 (in other words, releases a finger), when a distance between the center point of the icon 2 and the area boundary 1 is less than or equal to the preset distance 1, and an included angle between a boundary 1 of the icon 2 and the area boundary 1 is less than or equal to a preset included angle 1, the vehicle determines the location 2 of the icon 1 based on the pose of the icon 2 and the area boundary 1, and controls the HMI to display the icon 2 at the location 2. For example, refer to FIG. 5.

As shown in (a) in FIG. 5, an icon 501, an obstacle 502, and an area 503 are displayed on an HMI interface of a vehicle-mounted central display. The obstacle 502 is located on a side of the area 503, and a boundary 5021 of the obstacle 502 may be considered as a boundary of the area 503. For example, the icon 501 may be displayed in response to an operation that the user drags the icon 501 to a location shown in the figure. When the user releases the icon 501, if a distance L1 between a center point of the icon 501 and the boundary 5021 is less than or equal to the preset distance 1, and an included angle $\theta$ between a long edge of the icon 501 and the boundary 5021 is less than or equal to a preset included angle 1, the HMI interface is controlled to display an icon 504. As shown in (b) in FIG. 5, a long edge of the icon 504 is parallel to the boundary 5021, and a distance L between the icon 504 and the boundary 5021 is equal to (or greater than) a preset distance 2.

Optionally, a pose of the icon 504 may be considered as being determined by translating the icon 501 in a direction close to the boundary 5021 after the icon 501 is rotated counterclockwise by the angle $\theta$ by using the center point O of the icon 501 as a rotation center, or being determined by translating the icon 501 in a direction close to the boundary 5021 after the icon 501 is rotated counterclockwise by the angle $\theta$ by using, as a rotation center, a point O' that is of the icon 501 and that is closest to the boundary 5021.

As shown in (c) in FIG. 5, an icon 505 and a boundary 5021 are displayed on the HMI interface of the vehicle-mounted central display, where the boundary 5021 is a boundary of the area 503 (not shown in the figure). For example, the icon 505 may be displayed in response to an operation that the user drags the icon 505 to a location shown in the figure. When the user releases the icon 505, if a distance L2 between a center point of the icon 505 and the boundary 5021 is less than or equal to the preset distance 1, and an included angle $\theta$ between a short edge of the icon 505 and the boundary 5021 is less than or equal to a preset included angle 1, the HMI interface is controlled to display an icon 506. As shown in (d) in FIG. 5, a short edge of the icon 506 is parallel to the boundary 5021, and a distance L' between the icon 506 and the boundary 5021 is equal to (or greater than) the preset distance 2.

Optionally, a pose of the icon 506 may be considered as being determined by translating the icon 505 in a direction away from the boundary 5021 after the icon 505 is rotated clockwise by the angle $\theta$ by using the center point of the icon 505 as a rotation center, or being determined by translating the icon 505 in a direction away from the boundary 5021 after the icon 505 is rotated clockwise by the angle $\theta$ by using, as a rotation center, a point that is of the icon 505 and that is closest to the boundary 5021.

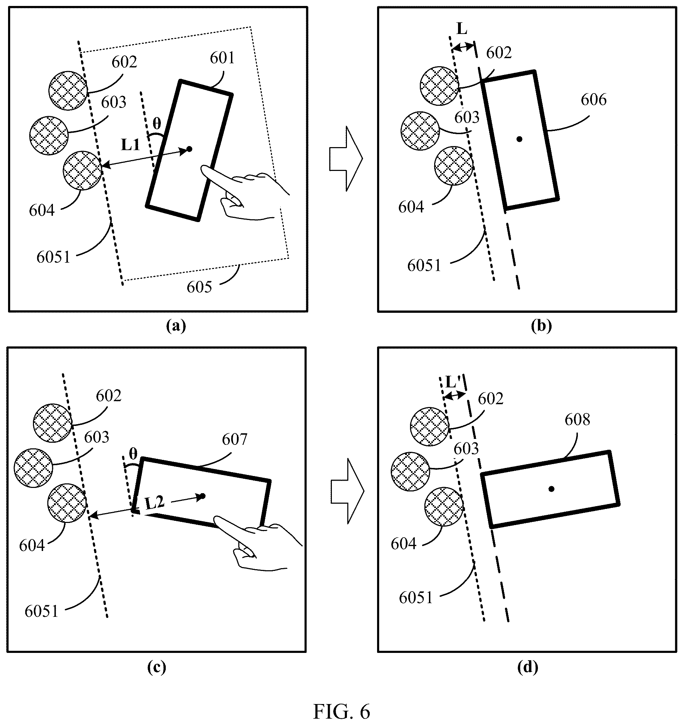

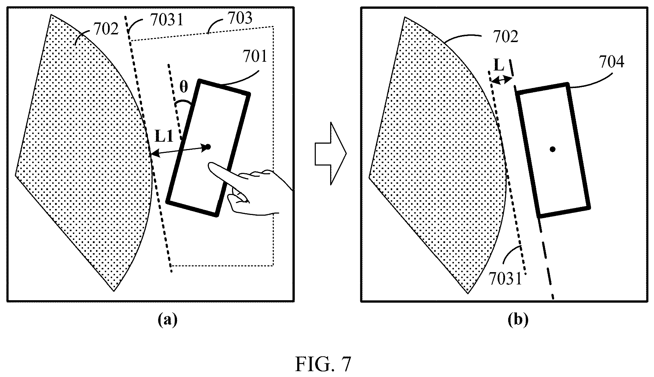

In some implementations, when the obstacle around the area 1 includes a plurality of scattered obstacles and/or includes an arc-shaped obstacle, a case of controlling, in response to a preset operation of the user, the HMI interface to display the icon 1 may be shown in FIG. 6 and FIG. 7.

As shown in (a) in FIG. 6, an icon 601, obstacles 602 to 604, and an area 605 are displayed on an HMI, where the obstacles 602 to 604 are located on a side of the area 605. In this case, "determining an area boundary 1 of an area 1" in S301 may include: determining a boundary 6051 of the area 605 based on a connection line between outer edges of two obstacles 602 and 604 that are closest to the icon 601. Further, the icon 601 may be displayed in response to an operation that the user drags the icon 601 to a location shown in the figure. When the user releases the icon 601, if a distance L1 between a center point of the icon 601 and the boundary 6051 is less than or equal to a preset distance 1, and an included angle $\theta$ between a long edge of the icon 601 and the boundary 6051 is less than or equal to a preset included angle 1, the HMI is controlled to display an icon 606. As shown in (b) in FIG. 6, a long edge of the icon 606 is parallel to the boundary 6051, and a distance L between the icon 606 and the boundary 6051 is equal to (or greater than) a preset distance 2.

As shown in (c) in FIG. 6, an icon 607 and the boundary 6051 are displayed on the HMI, where the boundary 6051 is a boundary of the area 605 (not shown in the figure). For example, the icon 607 may be displayed in response to an operation that the user drags the icon 607 to a location shown in the figure. When the user releases the icon 607, if a distance L2 between a center point of the icon 607 and the boundary 5021 is less than or equal to the preset distance 1, and an included angle $\theta$ between a short edge of the icon 607 and the boundary 6051 is less than or equal to the preset included angle 1, the HMI is controlled to display an icon 608. As shown in (d) in FIG. 6, a short edge of the icon 608 is parallel to the boundary 6051, and a distance L' between the icon 608 and the boundary 6051 is equal to (or greater than) the preset distance 2.

For a method for determining a pose of the icon 606 and a pose of the icon 608, refer to the descriptions in FIG. 5. Details are not described herein again.

In some implementations, if the obstacle around the area available for parking of the vehicle is an arc-shaped obstacle, the pose of the icon 1 may be determined based on a tangent of an outer edge of the obstacle.

As shown in (a) in FIG. 7, an icon 701, an obstacle 702, and an area 703 are displayed on an HMI, where the obstacle 702 is located on a side of the area 703. In this case, "determining a first area boundary of a first area" in S401 may include: using, as a tangent 7031 of an outer edge of the obstacle 702, a point that is on the outer edge of the obstacle 702 and that is closest to a center point of the icon 701, where the boundary 7031 is considered as a boundary of the area 703. For example, the icon 701 may be displayed in response to an operation that the user drags the icon 701 to a location shown in the figure. When the user releases the icon 701, if a distance L1 between a center point of the icon 701 and the boundary 7031 is less than or equal to a preset distance 1, and an included angle θ between a long edge of the icon 701 and the boundary 7031 is less than or equal to a preset included angle 1, the HMI is controlled to display an icon 704. As shown in (b) in FIG. 7, a long edge of the icon 704 is parallel to the boundary 7031, and a distance L between the icon 704 and the boundary 7031 is equal to (or greater than) a preset distance 2.

For a method for determining a pose of the icon 704, refer to the descriptions in FIG. 5. Details are not described herein again.

It should be noted that the icon 501, the icon 505, the icon 601, the icon 607, and the icon 701 may be understood as some examples of the icon 2 in the method 300, and the location of the icon 2 on the HMI interface may be understood as some examples of the location 1. The icon 504, the icon 506, the icon 606, the icon 608, and the icon 704 may be understood as some examples of the icon 1 in the method 300, and the location of the icon 1 on the HMI interface may be understood as some examples of the location 2. The area 503, the area 605, and the area 703 may be understood as some examples of the area 1 in the method 300. The boundary 5021, the boundary 6051, and the boundary 7031 may be understood as some examples of the area boundary 1 in the method 300. A long edge of a side that is of the icon 501 and that is close to the boundary 5021 and a short edge of a side that is of the icon 505 and that is close to the boundary 5021 may be understood as some examples of the boundary 1.

In some implementations, the area 1 further includes an area boundary 2. In this case, the pose of the icon 1 may be determined based on the icon 2, the area boundary 1, and the area boundary 2, and the HMI interface is controlled to display the icon 1 in the area 1.

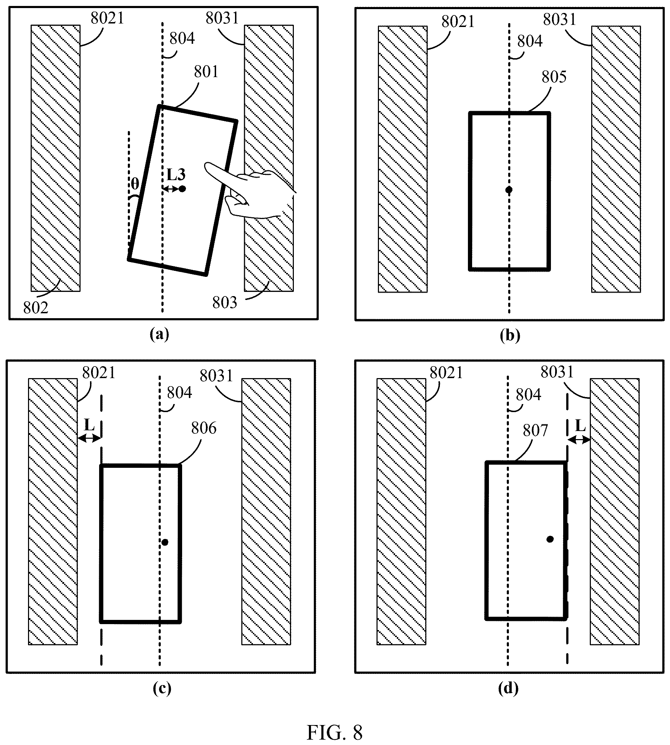

For example, FIG. 8 shows a group of HMIs according to an embodiment of this application.

As shown in (a) in FIG. 8, an icon 801, an obstacle 802, and an obstacle 803 are displayed on an HMI. An area between a boundary 8021 of the obstacle 802 and a boundary 8031 of the obstacle 803 indicates the area available for parking of the vehicle, where the boundary 8021 is parallel to the boundary 8031. In addition, a distance between the boundary 8021 and the boundary 8031 is less than or equal to a preset distance 1, and a straight line 804 is a perpendicular bisector of a connection line between the boundary 8021 and the boundary 8031. For example, the icon 801 may be displayed in response to an operation that the user drags the icon 801 to a location shown in the figure. When the user releases the icon 801, if a center point of the icon 801 is located between the boundary 8021 and the boundary 8031, or a distance L3 between a center point of the icon 801 and the straight line 804 is less than or equal to the preset distance 1, the HMI is controlled to display an icon 805, or display an icon 806, or display an icon 807. As shown in (b) in FIG. 8, a central axis parallel to a long edge of the icon 805 coincides with the straight line 804, and a distance between the icon 805 and each of the boundary 8021 and the boundary 8031 is greater than or equal to a preset distance 2. As shown in (c) in FIG. 8, a central axis parallel to a long edge of the icon 806 is parallel to the straight line 804, and a distance L between the icon 806 and the boundary 8021 is equal to (or greater than) the preset distance 2. As shown in (d) in FIG. 8, a central axis of the icon 806 is parallel to the straight line 804, and a distance L between the icon 806 and the boundary 8031 is equal to (or greater than) the preset distance 2.

Optionally, when it is detected that the center point of the icon 801 is located between the boundary 8021 and the boundary 8031, an icon 808 (not shown in the figure) is controlled to be displayed. In this case, an included angle between a long edge of the icon 808 and the boundary 8021 is θ, and a shortest distance between the icon 808 and the boundary 8021 and a shortest distance between the icon 808 and the boundary 8031 are both equal to (or greater than) the preset distance 2.

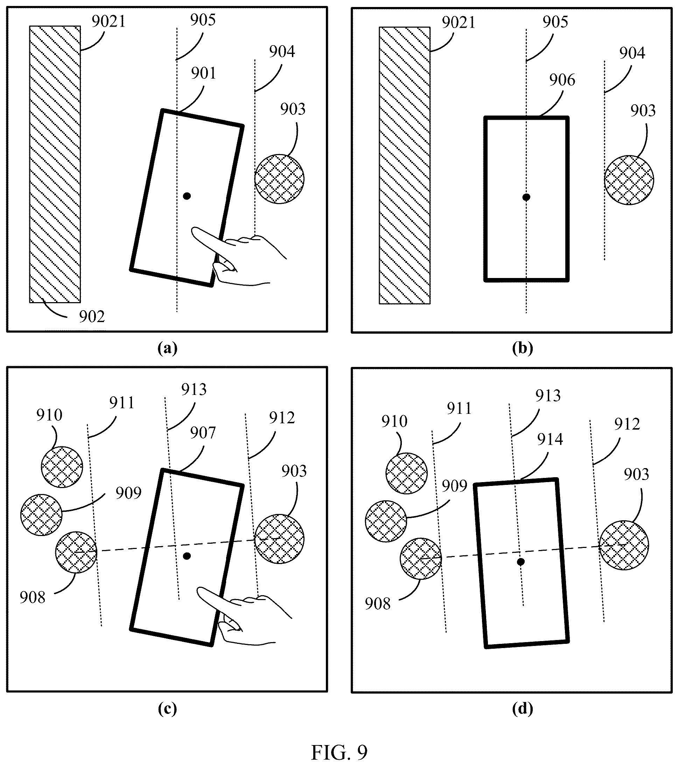

In some implementations, obstacles on two opposite sides of the area available for parking of the vehicle are arc-shaped obstacles. In this case, the area boundary 2 may be determined based on a tangent of an outer edge of the obstacle, and then the HMI interface is controlled based on the icon 2, the area boundary 1, and the area boundary 2 to display the icon 1. Details are shown in FIG. 9.

As shown in (a) in FIG. 9, an icon 901, an obstacle 902, and an obstacle 903 are displayed on an HMI, where the obstacle 902 has a long boundary 9021. In this case, a point that is of the obstacle 903 and that is closest to the boundary 9021 may be used as a tangent of the obstacle 903, where the tangent is another boundary 904 of an area available for parking of the vehicle, and a straight line 905 is a perpendicular bisector of a connection line between the boundary 9021 and the boundary 904. Further, the HMI may be controlled based on the icon 901, the boundary 9021, and the boundary 904 to display an icon 906. As shown in (b) in FIG. 9, a central axis parallel to a long edge of the icon 906 coincides with the straight line 905, and a distance between the icon 906 and each of the boundary 9021 and the boundary 904 is greater than or equal to a preset distance 2.

As shown in (c) in FIG. 9, an icon 907, an obstacle 903, and obstacles 908 to 910 are displayed on the HMI. For example, the icon 907 may be displayed in response to an operation that the user drags the icon 907 to a location shown in the figure. When the user releases the icon 907, a boundary 911 and a boundary 912 are determined based on two obstacles that are located on two sides of the icon 907 and that are closest to a center point of the icon 907. A straight line 913 is a perpendicular bisector of a connection line between the boundary 911 and the boundary 912. Further, the HMI may be controlled based on the icon 907, the boundary 911, and the boundary 912 to display an icon 914. As shown in (d) in FIG. 9, a central axis parallel to a long edge of the icon 914 coincides with the straight line 913, and a distance between the icon 914 and each of the boundary 911 and the boundary 912 is greater than or equal to a preset distance 2.

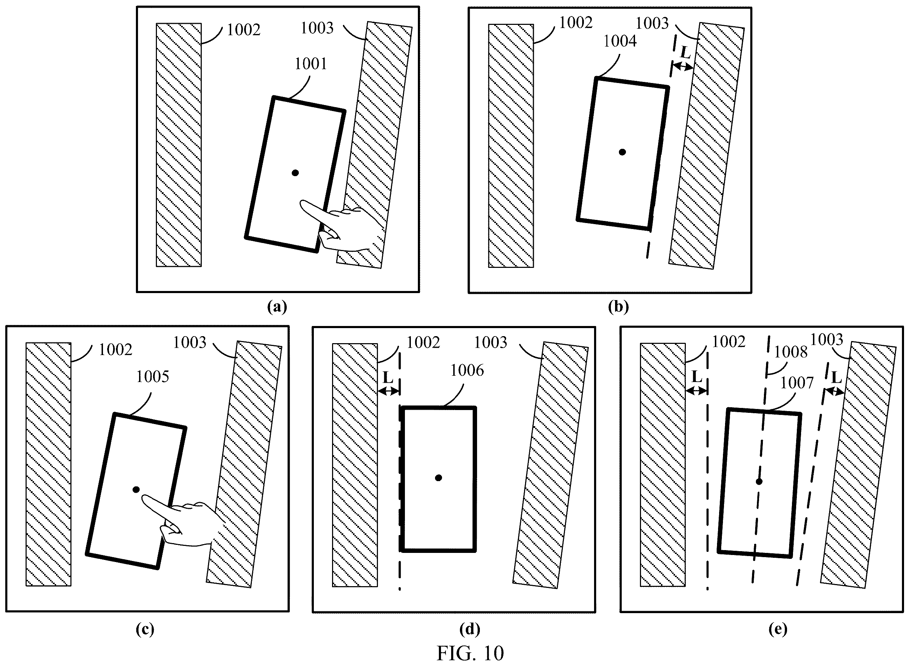

In some implementations, boundaries formed by obstacles on two sides of the area available for parking of the vehicle are not parallel to each other. In this case, the pose of the icon 1 may be determined based on only the boundary on one side, and then the HMI interface is controlled to display the icon 1. Details are shown in FIG. 10.

As shown in (a) in FIG. 10, an icon 1001, an obstacle 1002, and an obstacle 1003 are displayed on an HMI. An area between the obstacle 1002 and the obstacle 1003 indicates the area available for parking of the vehicle, and a boundary of the obstacle 1002 is not parallel to that of the obstacle 1003. For example, the icon 1001 may be displayed in response to an operation that the user drags the icon 1001 to a location shown in the figure. When the user releases the icon 1001, if an included angle between a long edge of the icon 1001 and the boundary of the obstacle 1003 is smaller, the HMI is controlled to display an icon 1004. As shown in (b) in FIG. 10, a long edge of the icon 1004 is parallel to the boundary of the obstacle 1003, and a distance L between the icon 1004 and the boundary of the obstacle 1003 is equal to (or greater than) a preset distance 2.

As shown in (c) in FIG. 10, an icon 1005 is displayed in response to an operation that the user drags the icon 1005 to a location shown in the figure. When the user releases the icon 1005, if a distance between a center point of the icon 1005 and the boundary of the obstacle 1002 is shorter, the HMI is controlled to display an icon 1006. As shown in (d) in FIG. 10, a long edge of the icon 1006 is parallel to the boundary of the obstacle 1002, and a distance L between the icon 1006 and the boundary of the obstacle 1002 is equal to (or greater than) the preset distance 2.

Optionally, the HMI interface may be controlled based on boundaries on two sides to display the icon 1. For example, the icon 1005 is displayed in response to an operation that the user drags the icon 1005 to a location shown in the figure. When the user releases the icon 1005, an icon 1007 may be further controlled to be displayed between the boundary of the obstacle 1002 and the boundary of the obstacle 1003, as shown in (e) in FIG. 10. A central axis parallel to a long edge of the icon 1007 coincides with a straight line 1008, and a distance between the icon 1007 and the boundary of the obstacle 1002 and a distance between the icon 1007 and the boundary of the obstacle 1002 are both equal to (or greater than) the preset distance 2.

It should be noted that the icon 801, the icon 901, the icon 907, the icon 1001, and the icon 1005 may be understood as some examples of the icon 2 in the method 300, and the location of the icon 2 on the HMI interface may be understood as some examples of the location 1. The icon 805, the icon 806, the icon 807, the icon 906, the icon 914, the icon 1004, the icon 1006, and the icon 1007 may be understood as some examples of the icon 1 in the method 300, and the location of the icon 1 on the HMI interface may be understood as some examples of the location 2. The boundary 8021, the boundary 9021, the boundary 911, and the boundary of the obstacle 1002 may be understood as some examples of the area boundary 1 in the method 300. The boundary 831, the boundary 904, the boundary 912, and the boundary of the obstacle 1003 may be understood as some examples of the area boundary 2 in the method 300. An area between the area boundary 1 and the area boundary 2 may be understood as some examples of the area 1 in the method 300.

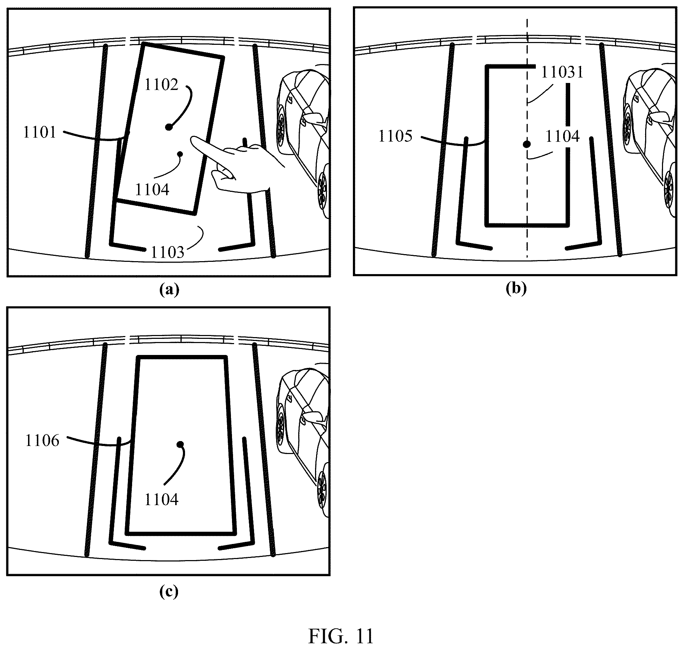

In some implementations, the first area includes a parking space image. In this case, the HMI interface may be controlled based on an operation shown in FIG. 8 to display the icon 1. To be specific, two long parking space lines in the parking space image are respectively used as two area boundaries, further, the pose of the icon 1 is determined, and the HMI interface is controlled to display the icon 1. Alternatively, the center point of the icon 1 may be controlled to coincide with a center point of the parking space image. Details are shown in FIG. 11.

As shown in (a) in FIG. 11, an icon 1101 and a parking space image 1103 are displayed on an HMI, where a center point of the icon 1101 is 1102, and a center point of the parking space image 1103 is 1104. For example, the icon 1101 may be displayed in response to an operation that the user drags the icon 1101 to a location shown in the figure. When the user releases the icon 1101, and it is detected that the center point 1104 of the icon 1101 is located in an area indicated by the parking space image 1103, the HMI is controlled to display an icon 1105. As shown in (b) in FIG. 11, a center point of the icon 1105 coincides with the center point of the parking space image 1103, and a central axis that is of the icon 1105 and that is parallel to a long edge of the icon 1105 coincides with a central axis that is of the parking space image and that is parallel to a long edge of the parking space image.

Optionally, the parking space image may be greatly distorted. In this case, distortion correction may be performed on the icon 1, to match the icon 1 with the parking space image. As described in (c) in FIG. 11, distortion correction is performed on an icon indicating the target parking area, and then the HMI interface is controlled to display an icon 1106. Two long boundaries of the icon 1106 are parallel to the parking space lines.

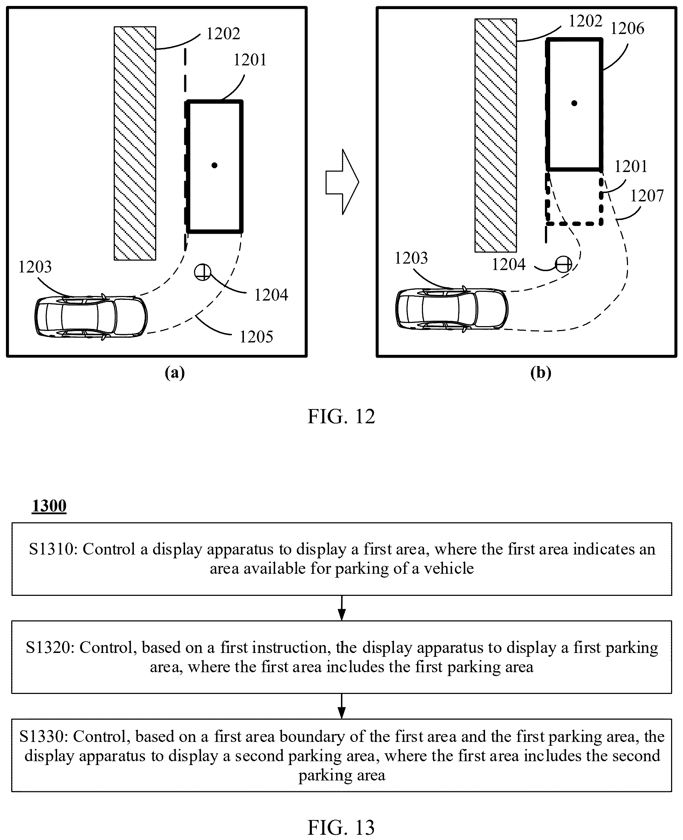

In some implementations, in response to an operation of the user, the HMI interface is controlled to display the icon 1, and the vehicle plans a movement route based on the target parking area indicated by the icon 1. However, if there is an obstacle on the movement route that hinders the vehicle from traveling, the target parking area may be re-determined based on a location of the obstacle, and the movement route is re-planned. Further, the HMI interface may be further controlled to display an icon indicating the re-determined target parking area. Details are shown in FIG. 12.

As shown in (a) in FIG. 12, an icon 1201, an obstacle 1202, and an icon 1203 indicating a vehicle location are displayed on the HMI interface. The vehicle plans a movement route 1205 based on a target parking location and a target pose that are indicated by the icon 1201. However, there is an obstacle 1204 on the movement route that hinders the vehicle from traveling. In this case, the vehicle may plan, based on a location of 1204, a movement route 1207 shown in (b) in FIG. 12, and may control, based on the route 1207, the HMI interface to display an icon 1206.

It should be noted that the icons indicating the parking area shown in FIG. 4 to FIG. 12 are merely examples for description. In a specific implementation process, the icon indicating the parking area may be a two-dimensional icon (for example, a rectangle icon), a three-dimensional icon (for example, a cuboid icon), or an icon in another form.

FIG. 13 is a schematic flowchart of a control method according to an embodiment of this application. The method 1300 may be performed by the vehicle 100 shown in FIG. 1. More specifically, the method 1300 may be performed by the computing platform 150 in the vehicle 100. Alternatively, the method 1300 may be performed by the human-machine interaction module 220 and the pose adjustment and determining module 230 shown in FIG. 2. For example, the method 1300 may include the following steps.

S1310: Control a display apparatus to display a first area, where the first area indicates an area available for parking of a vehicle.

For example, the display apparatus includes the display apparatus in the foregoing embodiment, or a first interface may include the HMI interface in the foregoing embodiment, or may include the parking interaction interface in the foregoing embodiment, for example, may be a graphical user interface (graphical user interface, GUI) of an automatic parking application.

For example, the first area may include the area 1 in the foregoing embodiment. The first area may be an image or a diagram of an area actually available for parking of the vehicle, and the area actually available for parking of the vehicle may be determined based on an obstacle and/or a parking space line.

In some possible implementations, a width of the area actually available for parking of the vehicle is greater than or equal to a preset width, and a length of the area is greater than or equal to a preset length. For example, the preset width may be 2 meters, a width of the vehicle, or another value. The preset length may be 5 meters, a length of the vehicle, or another value.

In some possible implementations, when an actual area does not meet a size condition, an image or a diagram of a related area is not displayed.

S1320: Control, based on a first instruction, the display apparatus to display a first parking area, where the first area includes the first parking area.

For example, the first instruction may be generated based on the foregoing preset operation of the user.

For example, the first parking area may include an area in which the icon 2 is located in the foregoing embodiment, and the first parking area is not a better parking area, or a posture obtained after the vehicle is parked into the first parking area is inconsistent with a target pose.

S1330: Control, based on the first parking area and a first area boundary of the first area, the display apparatus to display a second parking area, where the first area includes the second parking area.

For example, the second parking area may include an area in which the icon 1 is located in the foregoing embodiment, and the first area boundary may include the area boundary 1 in the foregoing embodiment.

In some possible implementations, the controlling the display apparatus to display a second parking area includes: when a distance between a preset point of the first parking area and the first area boundary is less than or equal to a first distance threshold, controlling the display apparatus to display the second parking area, where a distance between the second parking area and the first area boundary is greater than or equal to a second distance threshold.

For example, the first distance threshold may be the preset distance 1 in the foregoing embodiment, or may be another value.

For example, the second distance threshold may be the preset distance 2 in the foregoing embodiment, or may be another value.

In some possible implementations, the controlling the display apparatus to display the second parking area includes: when an included angle between the first area boundary and a first boundary of the first parking area is less than or equal to a first included angle threshold, controlling a second boundary of the second parking area to be parallel to the first area boundary, where the second boundary corresponds to the first boundary.

For example, the second boundary may include the boundary 1 in the foregoing embodiment.

For example, that the second boundary corresponds to the first boundary includes: Both the first boundary and the second boundary indicate a first side of the vehicle.

For example, after the vehicle is separately parked into an area indicated by the first parking area and an area indicated by the second parking area, the first side of the vehicle is close to a side indicated by the first boundary and a side of the second boundary. The first side may be any one of a left side, a right side, a front side, and a rear side of the vehicle.

For example, the first included angle threshold may be the preset included angle 1 in the foregoing embodiment, or may be another value.

In some possible implementations, the first area further includes a second area boundary, the second area boundary is parallel to the first area boundary, and a distance between the second area boundary and the first area boundary is less than or equal to a third distance threshold; and the controlling the display apparatus to display a second parking area includes: when the preset point of the first parking area is located between the first area boundary and the second area boundary, controlling, based on the first parking area, the first area boundary, and the second area boundary, the display apparatus to display the second parking area.

For example, the second area boundary may include the area boundary 2 in the foregoing embodiment.

For example, the third distance threshold may be twice a width of the first parking area, or the third distance threshold may be another value.

In some possible implementations, the controlling the display apparatus to display the second parking area includes: when a distance between the preset point of the first parking area and a first reference line is less than or equal to a fourth distance threshold, controlling a shortest distance between the second parking area and the first area boundary to be greater than or equal to a fifth distance threshold, and/or controlling a shortest distance between the second parking area and the second area boundary to be greater than or equal to the fifth distance threshold, where the first reference line is a perpendicular bisector of a connection line between the first area boundary and the second area boundary.

For example, the fourth distance threshold may be the preset distance 1 or another value. The fourth distance threshold may alternatively be a value converted based on a distance in the real world. For example, the fourth distance threshold may be determined based on a preset threshold 1. For example, the fourth distance threshold is obtained by converting the preset threshold 1 in a coordinate system in the real world into a coordinate system displayed on the first interface.

For example, the preset threshold 1 may be 0.3 meter, 0.5 meter, or another value.

For example, the fifth distance threshold may be the preset distance 2 or another value. For example, the fifth distance threshold may alternatively be a value converted based on a distance in the real world. For example, the fifth distance threshold may be determined based on a preset threshold 2.

For example, the preset threshold 2 may be 0.3 meter, 0.5 meter, or another value.

Optionally, a first central axis of the second parking area is parallel to the first reference line, where the first central axis indicates a location of a central axis of the vehicle.

For example, the first reference line may include the straight line 804, the straight line 905, and the straight line 913 in the foregoing embodiment.

Optionally, the first central axis coincides with the first reference line.

In some possible implementations, the controlling the display apparatus to display the second parking area includes: controlling, based on the first area boundary and the first parking area, the display apparatus to display a third parking area; and when there is an obstacle on a first planned route, controlling the display apparatus to display the second parking area, where the first planned route is a route for indicating the vehicle to travel from an area in which the vehicle is currently located to the third parking area.

For example, the third parking area may include an area in which the icon 1201 is located in the foregoing embodiment, and the second parking area may include an area in which the icon 1206 is located in the foregoing embodiment.

For example, the first planned route may include the movement route 1205 in the foregoing embodiment.

According to the control method provided in this embodiment of this application, a pose in the target parking area can be automatically adjusted. This helps reduce complexity of a user operation in a remote parking process, thereby improving user experience. In addition, a plurality of automatic adjustment manners are designed for different parking scenarios, to help improve intelligence of an automatic parking system and improve a sense of technology felt by the user during use.

In embodiments of this application, unless otherwise stated or there is a logic conflict, terms and/or descriptions in all embodiments are consistent and may be mutually referenced technical features in different embodiments may be combined into a new embodiment based on an internal logical relationship thereof.

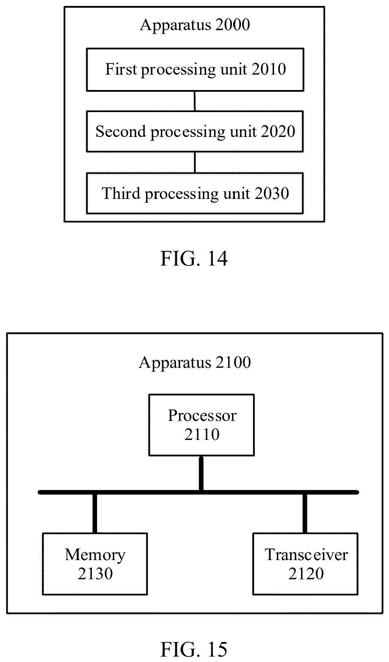

The foregoing describes in detail the methods provided in embodiments of this application with reference to FIG. 1 to FIG. 13. Apparatuses provided in embodiments of this application are described below in detail with reference to FIG. 14 and FIG. 15. It should be understood that descriptions of the apparatus embodiments correspond to the descriptions of the method embodiments. Therefore, for content that is not described in detail, refer to the foregoing method embodiments. For brevity, details are not described herein again.

FIG. 14 is a block diagram of a control apparatus 2000 according to an embodiment of this application. The apparatus 2000 includes a first processing unit 2010, a second processing unit 2020, and a third processing unit 2030.

The apparatus 2000 may include units configured to perform the method in FIG. 3. In addition, the units in the apparatus 2000 are separately used to implement corresponding procedures in the method embodiment in FIG. 13.

More specifically, the first processing unit 2010 is configured to control a display apparatus to display a first area, where the first area indicates an area available for parking of a vehicle. The second processing unit 2020 is configured to control, based on a first instruction, the display apparatus to display a first parking area, where the first area includes the first parking area. The third processing unit 2030 is configured to control, based on a first area boundary of the first area and the first parking area, the display apparatus to display a second parking area, where the first area includes the second parking area.

In some possible implementations, the third processing unit 2030 is configured to: when a distance between a preset point of the first parking area and the first area boundary is less than or equal to a first distance threshold, control the display apparatus to display the second parking area, where a distance between the second parking area and the first area boundary is greater than or equal to a second distance threshold.

In some possible implementations, the third processing unit 2030 is configured to: when an included angle between the first area boundary and a first boundary of the first parking area is less than or equal to a first included angle threshold, control a second boundary of the second parking area to be parallel to the first area boundary, where the second boundary corresponds to the first boundary.

In some possible implementations, the first area further includes a second area boundary, the second area boundary is parallel to the first area boundary, and a distance between the second area boundary and the first area boundary is less than or equal to a third distance threshold; and the third processing unit 2030 is configured to: when the preset point of the first parking area is located between the first area boundary and the second area boundary, control, based on the first parking area, the first area boundary, and the second area boundary, the display apparatus to display the second parking area.

In some possible implementations, the third processing unit 2030 is configured to: when a distance between the preset point of the first parking area and a first reference line is less than or equal to a fourth distance threshold, control a shortest distance between the second parking area and the first area boundary to be greater than or equal to a fifth distance threshold, and/or control a shortest distance between the second parking area and the second area boundary to be greater than or equal to the fifth distance threshold, where the first reference line is a perpendicular bisector of a connection line between the first area boundary and the second area boundary.

In some possible implementations, a first central axis of the second parking area is parallel to the first reference line, where the first central axis indicates a location of a central axis of the vehicle.

In some possible implementations, the first central axis coincides with the first reference line.

In some possible implementations, the third processing unit 2030 is configured to: control, based on the first area boundary and the first parking area, the display apparatus to display a third parking area; and when there is an obstacle on a first planned route, control the display apparatus to display the second parking area, where the first planned route is a route for indicating the vehicle to travel from an area in which the vehicle is currently located to the third parking area.

In some possible implementations, the first area boundary is determined based on at least one of the following: a boundary of an obstacle, a tangent of an outer edge of an obstacle, and a parking space line.

For example, the first processing unit 2010, the second processing unit 2020, and the third processing unit 2030 may be disposed in the vehicle 100 shown in FIG. 1. More specifically, the foregoing units may be disposed in the computing platform 150 shown in FIG. 1. For example, the first processing unit 2010, the second processing unit 2020, and the third processing voltage 2030 may alternatively be disposed in the system shown in FIG. 2. More specifically, the first processing unit 2010, the second processing unit 2020, and the third processing voltage 2030 may be disposed in the human-machine interaction module 220.

It should be understood that division into units in the foregoing apparatuses is merely logical function division. During actual implementation, all or some of the units may be integrated into one physical entity, or may be physically separated. In addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units in the apparatus. The processor is, for example, a general-purpose processor, for example, a CPU or a microprocessor, and the memory is a memory inside the apparatus or a memory outside the apparatus. Alternatively, the units in the apparatus may be implemented in a form of hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All units in the foregoing apparatuses may be implemented in a form of software invoked by the processor, or all units may be implemented in a form of hardware circuit, or some units may be implemented in a form of software invoked by the processor, and a remaining part may be implemented in a form of hardware circuit.

Each unit in the foregoing apparatus may be one or more processors (or processing circuits) configured to implement the foregoing methods, for example, a CPU, a GPU, an NPU, a TPU, a DPU, a microprocessor, a DSP, an ASIC, or an FPGA, or a combination of at least two of these processor forms.

In addition, all or some of the units in the foregoing apparatuses may be integrated, or may be implemented independently. In an implementation, the units may be integrated together and implemented in a form of system-on-a-chip (system-on-a-chip, SOC). The SOC may include at least one processor, configured to implement any one of the methods or implement functions of the units in the apparatuses. Types of the at least one processor may be different, for example, the at least one processor includes a CPU and an FPGA, a CPU and an artificial intelligence processor, or a CPU and a GPU.

In a specific implementation process, the operations performed by the first processing unit 2010, the second processing unit 2020, and the third processing unit 2030 may be performed by one processor, or may be performed by different processors. In a specific implementation process, the one or more processors may be processors disposed on the computing platform 150 shown in FIG. 1. Alternatively, the apparatus 2000 may be a chip disposed in the vehicle 100.

FIG. 15 is a block diagram of a control apparatus according to an embodiment of this application. The control apparatus 2100 shown in FIG. 15 may include a processor 2110, a transceiver 2120, and a memory 2130. The processor 2110, the transceiver 2120, and the memory 2130 are connected through an internal connection path. The memory 2130 is configured to store instructions. The processor 2110 is configured to execute the instructions stored in the memory 2130, to implement the methods in the foregoing embodiments. Optionally, the memory 2130 may be coupled to the processor 2110 through an interface, or integrated with the processor 2110.

It should be noted that the transceiver 2120 may include but is not limited to a transceiver apparatus of an input/output interface (input/output interface) type, to implement communication between the apparatus 2100 and another device or a communication network.

The memory 2130 may be a read-only memory (read-only memory, ROM), a static storage device, a dynamic storage device, or a random access memory (random access memory,

RAM).

The transceiver 2120 uses, for example, but is not limited to, a transceiver apparatus of a transceiver type, to implement communication between the apparatus 2100 and another device or a communication network, to receive/send data/information used to implement the methods in the foregoing embodiments.

In a specific implementation process, the apparatus 2100 may be disposed in the computing platform 150 shown in FIG. 1.

An embodiment of this application further provides a vehicle. The vehicle includes the apparatus 2000 or the apparatus 2100.

An embodiment of this application further provides a computer program product. The computer program product includes computer program code. When the computer program code is run on a computer, the computer is enabled to implement the methods in the foregoing embodiments of this application.

An embodiment of this application further provides a computer-readable storage medium. The computer-readable medium stores computer instructions. When the computer instructions are run on a computer, the computer is enabled to implement the methods in the foregoing embodiments of this application.

An embodiment of this application further provides a chip, including a circuit, configured to perform the methods in the foregoing embodiments of this application.

In an implementation process, steps in the foregoing methods may be implemented by using an integrated logic circuit of hardware in a processor, or by using instructions in a form of software. The methods disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory and completes the steps in the foregoing methods in combination with hardware of the processor. To avoid repetition, details are not described herein again.

It may be clearly understood by a person skilled in the art that, for the purpose of convenient and brief description, for detailed working processes of the foregoing system, apparatuses, and units, refer to corresponding processes in the foregoing method embodiments. Details are not described herein again.

In several embodiments provided in this application, it should be understood that the disclosed system, apparatuses and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and parts displayed as units may or may not be physical units, may be located at one location, or may be distributed on a plurality of network units. Some or all of the units may be selected based on an actual requirement to achieve the objectives of the solutions in embodiments.

In addition, functional units in embodiments of this application may be integrated into one processing unit, or each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A control method, comprising:

   controlling a display apparatus to display a first area, wherein the first area indicates an area available for parking of a vehicle;
   controlling, based on a first instruction, the display apparatus to display a first parking area, wherein the first area comprises the first parking area; and
   controlling, based on a first area boundary of the first area and the first parking area, the display apparatus to display a second parking area, wherein the first area comprises the second parking area.

2. The method according to claim 1, wherein the controlling the display apparatus to display a second parking area comprises:

   when a distance between a preset point of the first parking area and the first area boundary is less than or equal to a first distance threshold, controlling the display apparatus to display the second parking area, wherein
a distance between the second parking area and the first area boundary is greater than or equal to a second distance threshold.

3. The method according to claim 2, wherein the controlling the display apparatus to display a second parking area comprises:
   when an included angle between the first area boundary and a first boundary of the first parking area is less than or equal to a first included angle threshold, controlling a second boundary of the second parking area to be parallel to the first area boundary, wherein the second boundary corresponds to the first boundary.

4. The method according to any one of claims 1 to 3, wherein the first area further comprises a second area boundary, the second area boundary is parallel to the first area boundary, and a distance between the second area boundary and the first area boundary is less than or equal to a third distance threshold; and the controlling the display apparatus to display a second parking area comprises:
   when the preset point of the first parking area is located between the first area boundary and the second area boundary, controlling, based on the first parking area, the first area boundary, and the second area boundary, the display apparatus to display the second parking area.

5. The method according to claim 4, wherein the controlling the display apparatus to display the second parking area comprises:

   when a distance between the preset point of the first parking area and a first reference line is less than or equal to a fourth distance threshold, controlling a shortest distance between the second parking area and the first area boundary to be greater than or equal to a fifth distance threshold, and/or controlling a shortest distance between the second parking area and the second area boundary to be greater than or equal to the fifth distance threshold, wherein
   the first reference line is a perpendicular bisector of a connection line between the first area boundary and the second area boundary.

6. The method according to claim 5, wherein a first central axis of the second parking area is parallel to the first reference line, or the first central axis coincides with the first reference line.

7. The method according to any one of claims 1 to 6, wherein the controlling the display apparatus to display a second parking area comprises:

controlling, based on the first area boundary and the first parking area, the display apparatus to display a third parking area; and

when there is an obstacle on a first planned route, controlling the display apparatus to display the second parking area, wherein the first planned route is a route for indicating the vehicle to travel from an area in which the vehicle is currently located to the third parking area.

8. The method according to any one of claims 1 to 7, wherein the first area boundary is determined based on at least one of the following: a boundary of an obstacle, a tangent of an outer edge of an obstacle, and a parking space line.

9. A control apparatus, comprising:

a first processing unit, configured to control a display apparatus to display a first area, wherein the first area indicates an area available for parking of a vehicle;

a second processing unit, configured to control, based on a first instruction, the display apparatus to display a first parking area, wherein the first area comprises the first parking area; and

a third processing unit, configured to control, based on a first area boundary of the first area and the first parking area, the display apparatus to display a second parking area, wherein the first area comprises the second parking area.

10. The apparatus according to claim 9, wherein the third processing unit is configured to:

when a distance between a preset point of the first parking area and the first area boundary is less than or equal to a first distance threshold, control the display apparatus to display the second parking area, wherein

a distance between the second parking area and the first area boundary is greater than or equal to a second distance threshold.

11. The apparatus according to claim 10, wherein the third processing unit is configured to:
when an included angle between the first area boundary and a first boundary of the first parking area is less than or equal to a first included angle threshold, control a second boundary of the second parking area to be parallel to the first area boundary, wherein the second boundary corresponds to the first boundary.

12. The apparatus according to any one of claims 9 to 11, wherein the first area further comprises a second area boundary, the second area boundary is parallel to the first area boundary, and a distance between the second area boundary and the first area boundary is less than or equal to a third distance threshold; and the third processing unit is configured to:
when the preset point of the first parking area is located between the first area boundary and the second area boundary, control, based on the first parking area, the first area boundary, and the second area boundary, the display apparatus to display the second parking area.

13. The apparatus according to claim 12, wherein the third processing unit is configured to:

when a distance between the preset point of the first parking area and a first reference line is less than or equal to a fourth distance threshold, control a shortest distance between the second parking area and the first area boundary to be greater than or equal to a fifth distance threshold, and/or control a shortest distance between the second parking area and the second area boundary to be greater than or equal to the fifth distance threshold, wherein

the first reference line is a perpendicular bisector of a connection line between the first area boundary and the second area boundary.

14. The apparatus according to claim 13, wherein a first central axis of the second parking area is parallel to the first reference line, or the first central axis coincides with the first reference line.

15. The apparatus according to any one of claims 9 to 14, wherein the third processing unit is configured to:

control, based on the first area boundary and the first parking area, the display apparatus to display a third parking area; and

when there is an obstacle on a first planned route, control the display apparatus to display the second parking area, wherein the first planned route is a route for indicating the vehicle to travel from an area in which the vehicle is currently located to the third parking area.

16. The apparatus according to any one of claims 9 to 15, wherein the first area boundary is determined based on at least one of the following: a boundary of an obstacle, a tangent of an outer edge of an obstacle, and a parking space line.

17. A control apparatus, comprising:

a memory, configured to store a computer program; and

a processor, configured to execute the computer program stored in the memory, to enable the apparatus to perform the method according to any one of claims 1 to 8.

18. A vehicle, comprising the apparatus according to any one of claims 9 to 17.

19. A computer-readable storage medium, wherein the computer-readable storage medium stores instructions, and when the instructions are executed by a processor, the processor is enabled to implement the method according to any one of claims 1 to 8.

20. A chip, wherein the chip comprises a circuit, and the circuit is configured to perform the method according to any one of claims 1 to 8.

Vehicle 100

Sensing system 120

Display apparatus 130

Computing platform 150

Processor 151

Processor 152

...

Processor 15n

FIG. 1

**200**

Sensing module 210

Human-machine interaction module 220

Pose adjustment and determining module 230

Planning control module 240

Actuator 250

FIG. 2

**300**

S301: Determine an area boundary 1 of an area 1 and a pose 1 of an icon 2 in response to a preset operation of a user, where the pose 1 indicates at least a location 1 of the icon 2 on an HMI interface

S302: Determine a pose of an icon 1 based on the pose 1 and the area boundary 1, where the pose of the icon 1 indicates at least a location 2 of the icon 1 on the HMI interface

S303: Control the location 2 on the HMI interface to display the icon 1

FIG. 3

FIG. 4

FIG. 5

**FIG. 6**

FIG. 7

FIG. 8

(a)

(b)

(c)

(d)

FIG. 9

FIG. 10

**(a)**

**(b)**

**(c)**

FIG. 11

FIG. 12

**1300**

S1310: Control a display apparatus to display a first area, where the first area indicates an area available for parking of a vehicle

S1320: Control, based on a first instruction, the display apparatus to display a first parking area, where the first area includes the first parking area

S1330: Control, based on a first area boundary of the first area and the first parking area, the display apparatus to display a second parking area, where the first area includes the second parking area

FIG. 13

Apparatus 2000

First processing unit 2010

Second processing unit 2020

Third processing unit 2030

FIG. 14

Apparatus 2100

Processor
2110

Memory
2130

Transceiver
2120

FIG. 15

## INTERNATIONAL SEARCH REPORT

| International application No. |
|---|
| **PCT/CN2023/088380** |

| A. | CLASSIFICATION OF SUBJECT MATTER |
|---|---|

B60W30/06(2006.01)i;  G06F3/0488(2022.01)i

According to International Patent Classification (IPC) or to both national classification and IPC

| B. | FIELDS SEARCHED |
|---|---|

Minimum documentation searched (classification system followed by classification symbols)

    IPC:  B60W; G06F

Documentation searched other than minimum documentation to the extent that such documents are included in the fields searched

Electronic data base consulted during the international search (name of data base and, where practicable, search terms used)

    CNTXT, CNKI, ENTXTC: 显示, 泊车, 触摸, 位姿; VEN, USTXT, EPTXT, GBTXT, WOTXT, ENTXT, ISI: display, parking, touch, posture.

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 20140094116 A (AJIN INDUSTRIAL CO., LTD. et al.) 30 July 2014 (2014-07-30) description, paragraphs 31-38 and 52-57, and figure 5 | 1-20 |
| X | CN 109278744 A (GUANGZHOU XIAOPENG MOTORS TECHNOLOGY CO., LTD.) 29 January 2019 (2019-01-29) description, paragraphs 102-129, and figures 1-7 | 1-20 |
| A | US 2017036695 A1 (HYUNDAI MOBIS CO., LTD.) 09 February 2017 (2017-02-09) entire document | 1-20 |
| A | CN 109693666 A (CHINA FAW GROUP CORP., LTD.) 30 April 2019 (2019-04-30) entire document | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 December 2023** | **21 December 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/088380**

| Patent document cited in search report | | | Publication date (day/month/year) | Patent family member(s) | | | Publication date (day/month/year) |
|---|---|---|---|---|---|---|---|
| KR | 20140094116 | A | 30 July 2014 | KR | 101487161 | B1 | 28 January 2015 |
| CN | 109278744 | A | 29 January 2019 | EP | 3816003 | A1 | 05 May 2021 |
| | | | | EP | 3816003 | B1 | 16 August 2023 |
| | | | | WO | 2020082775 | A1 | 30 April 2020 |
| | | | | CN | 109278744 | B | 07 July 2020 |
| US | 2017036695 | A1 | 09 February 2017 | US | 10214239 | B2 | 26 February 2019 |
| | | | | DE | 102016114288 | A1 | 09 February 2017 |
| | | | | KR | 20170016201 | A | 13 February 2017 |
| | | | | KR | 102326057 | B1 | 12 November 2021 |
| CN | 109693666 | A | 30 April 2019 | CN | 109693666 | B | 05 March 2021 |

Form PCT/ISA/210 (patent family annex) (July 2022)